# FASCICULE DE BREVET EUROPEEN

(11) **EP 3 171 341 B1**
(45) Date de publication et mention de la délivrance du brevet: **11.09.2019**
(21) Numéro de dépôt: 16197778.0
(22) Date de dépôt: 08.11.2016
(51) Int. Cl.: G07F 7/08

(54) **TERMINAL DE PAIEMENT ÉLECTRONIQUE INTÉGRANT UN MODULE DE PAIEMENT SANS CONTACT RÉSISTANT AUX CHOCS, GUIDE LUMIÈRE CORRESPONDANT**
ELEKTRONISCHES ZAHLUNGSTERMINAL MIT INTEGRIERTEM STOSSFESTEM ZAHLUNGSMODUL, UND ENTSPRECHENDER LICHTWELLENLEITER
ELECTRONIC PAYMENT TERMINAL INCLUDING A SHOCK-PROOF CONTACTLESS PAYMENT MODULE, CORRESPONDING LIGHT GUIDE

(30) Priorité: 19.11.2015 FR 1561159
(43) Date de publication de la demande: 24.05.2017
(73) Titulaire: Ingenico Group, 75015 Paris (FR)
(72) Inventeur: CHOWDHARY, Ferhaj, 95280 JOUY-LE-MOUTIER (FR); COQUELET, Didier, 60540 PUISEUX-LE-HAUBERGER (FR); ROBERT, Franck, 75011 PARIS (FR)
(74) Mandataire: Vidon Brevets & Stratégie

(56) Documents cités:
- KR-Y1- 200 471 919

## Description

### 1 Domaine de l'invention

La présente invention se rapporte au domaine des terminaux de paiement électroniques, et plus particulièrement aux terminaux de paiement électronique offrant la possibilité d'un paiement sans contact, par exemple via un module spécifique intégré.

### 2 Solutions de l'art antérieur

L'apparition de la norme de paiement sans contact dans le domaine des transactions commerciales s'est traduite par de nouvelles contraintes pour les terminaux de paiement électronique offrant cette possibilité. En particulier, de nouvelles problématiques sont apparues en relation avec l'intégration de l'antenne permettant la communication du terminal avec la carte de paiement de l'utilisateur.

Dans une configuration particulièrement répandue, cette antenne est disposée au pourtour de l'écran du terminal. Ainsi, pour effectuer une transaction sans contact avec un tel appareil, l'utilisateur doit présenter sa carte au niveau de l'écran du terminal en vue d'établir la communication permettant la transaction.

Une telle implémentation, bien qu'intéressante sur le plan de la compacité du terminal, conduit à des problématiques de compatibilité électromagnétique pouvant dégrader la communication entre le terminal de paiement électronique et la carte de paiement de l'utilisateur. De telles interférences peuvent aller jusqu'à interdire d'atteindre les niveaux de performances exigés par les dernières normes en vigueur dans le domaine (i.e. les normes ISO/IEC 14443, ISO18092:2004 et ISO15693).<page 1a>

En réponse à la problématique précitée de compatibilité électromagnétique, les inventeurs de la présente demande de brevet ont conçu un nouveau type de terminal de paiement électronique présentant un module de paiement sans contact déporté sur l'un des côtés du terminal. Ainsi, l'antenne dédiée à la communication avec la carte de paiement de l'utilisateur se trouve mieux isolée des pollutions électromagnétiques liées au fonctionnement du reste du terminal, permettant par là-même d'atteindre de hautes performances conformes aux exigences des dernières normes dans le domaine.

Par ailleurs, de telles normes exigent la présence d'indicateurs lumineux dédiés à l'affichage de la progression de la transaction. De tels indicateurs lumineux sont par exemple implémentés sous la forme d'un guide lumière comme divulgué dans le document de brevet KR200471919Y1.

Cependant, les inventeurs ont constatés que ce déport du module de paiement sans contact peut conduire à une fragilité du terminal de paiement électronique, notamment lors d'une chute du terminal. En effet, la partie déportée se trouve plus exposée lors d'une telle chute, pouvant intervenir par exemple lors de la présentation du terminal de paiement électronique par le commerçant à l'utilisateur de la carte de paiement. Ainsi, il est courant pour les sociétés fabricants de tels terminaux de paiement électronique de se fixer des objectifs de résistance de leurs produits à des chutes de 80 cm de haut, voire 1,20 m dans certains cas.

Pour améliorer la résistance d'un tel produit, une solution pourrait être d'utiliser une coque comme on peut en rencontrer pour différents équipements électroniques. Cependant, une telle solution pose à la fois des problèmes esthétiques, de coût, ainsi que des problèmes de fiabilité. En effet, une telle coque pouvant s'enlever pendant la chute, la fiabilité de la solution proposée peut ne pas être suffisante pour une application professionnelle.

Il existe donc un besoin pour une solution permettant de rendre un terminal de paiement électronique présentant un module de paiement sans contact déporté résistant aux chocs de manière fiable et à moindre coût.

### 1 Résumé de l'invention

L'invention propose une solution nouvelle qui ne présente pas l'ensemble de ces inconvénients de l'état de la technique, sous la forme d'un terminal de paiement électronique comprenant un guide lumière destiné à guider la lumière d'au moins une source lumineuse interne audit terminal de paiement électronique vers l'extérieur dudit terminal de paiement électronique, ledit guide lumière étant intégré à un module de paiement sans contact intégré audit terminal de paiement électronique, ledit guide lumière comprenant en outre au moins un patin amortisseur de choc s'étendant au-delà de la surface externe dudit terminal de paiement électronique.

Ainsi, l'invention propose une solution nouvelle et inventive pour augmenter la résistance aux chocs d'un terminal de paiement électronique permettant les paiements sans contact, et ce, tout en maintenant un coût optimum de la solution.

En effet, l'invention prévoit que le guide lumière initialement dédié à l'affichage des points lumineux imposés par les normes de paiement sans contact précitées pour signaler la progression de la transaction, soit utilisé également pour l'amortissement des chocs, par exemple lors des chutes du terminal.

Ainsi, selon l'invention, les patins amortisseurs sont dédiés plus spécifiquement à la protection du module de paiement sans contact d'un terminal de paiement électronique, ce module étant plus fragile que le reste du dispositif lorsqu'il est déporté.

Pour ce faire, l'invention propose un terminal de paiement électronique comprenant un guide lumière présentant des patins d'amortissement dépassant de la surface externe du terminal de manière à permettre l'amortissement des chocs le cas échéant. Un tel guide étant intégré au terminal, la solution est alors particulièrement résistante car un tel patin ne peut pas être arraché lors d'une chute comme ce pourrait être le cas pour une simple coque de protection.

Selon une caractéristique particulière de l'invention, le terminal de paiement électronique est caractérisé en ce que ledit au moins un patin amortisseur de choc s'étend de part et d'autre d'au moins une arête dudit terminal de paiement électronique.

Ainsi, selon ce mode de réalisation de l'invention, le patin amortisseur est placé sur une zone de fragilité du terminal, optimisant ainsi la fonction de protection du terminal.

Selon un mode de réalisation particulier de l'invention, le terminal de paiement électronique est caractérisé en ce que ladite au moins une arête est située en périphérie de la face arrière dudit terminal.

Ainsi, selon ce mode de réalisation de l'invention, le patin amortisseur est placé sur la zone la plus susceptible de toucher un obstacle en premier lors d'une chute survenue en conditions opérationnelles d'utilisation, e.g. lorsque le commerçant tend le terminal de paiement électronique à l'acheteur dans le but d'effectuer une transaction.

Selon un aspect particulier de l'invention, le terminal de paiement électronique est caractérisé en ce que ledit patin amortisseur est constitué de la même matière que le reste du guide lumière.

Ainsi, selon ce mode de réalisation de l'invention, le guide lumière peut être réalisé de manière particulièrement simple et économique, par exemple par moulage en une seule étape. Par ailleurs, les patins amortisseurs sont ainsi également aptes à conduire la lumière.

Selon une caractéristique particulière de l'invention, le terminal de paiement électronique est caractérisé en ce que ladite matière est du silicone.

Ainsi, selon ce mode de réalisation de l'invention, le guide de lumière est en une matière économique permettant à la fois de guider la lumière et d'amortir les chocs. Par ailleurs, la dureté de cette matière peut être facilement adaptée pour assurer une fonction d'amortissement optimale tout en préservant sa capacité à guider la lumière.

Selon un mode de réalisation particulier de l'invention, le terminal de paiement électronique est caractérisé en ce que ladite matière présente une dureté comprise entre 55 et 65 Shore A, de préférence 60 Shore A.

Ainsi, selon ce mode de réalisation de l'invention, la dureté du guide lumière est optimisée pour l'amortissement des chocs subis par un terminal de paiement électronique lors d'une chute jusqu'à 1,20 m de haut, tout en préservant la fonction de guide de lumière.

Selon une caractéristique particulière de l'invention, le terminal de paiement électronique, comprenant un guide lumière présentant au moins une excroissance affleurant la surface externe dudit terminal de paiement électronique, ladite excroissance étant disposée en regard de ladite au moins une source lumineuse interne audit terminal, est caractérisé en ce que ledit patin amortisseur de choc est également disposé en regard de ladite au moins une source lumineuse interne audit terminal de paiement électronique.

Ainsi, selon ce mode de réalisation de l'invention, le guide lumière remplit sa fonction à l'aide d'excroissances, chacune de ces excroissances permettant de guider la lumière d'une source lumineuse interne au terminal vers l'extérieur. Par ailleurs, les patins amortisseurs de choc étant de la même matière que le reste du guide de lumière, ils peuvent également guider la lumière vers l'extérieur du terminal lorsqu'ils sont disposés en regard des mêmes sources lumineuses. Ainsi, les patins peuvent, en plus de leur rôle d'amortisseur, renforcer la signalisation lumineuse faite à l'utilisateur lors de la transaction sans contact.

Selon un aspect particulier de l'invention, le terminal de paiement électronique est caractérisé en ce qu'il présente quatre desdits patins amortisseurs de choc.

Ainsi, selon ce mode de réalisation de l'invention, le terminal présente autant de patins amortisseurs que d'indicateurs lumineux requis par les normes précitées sur les terminaux de paiement électronique sans contact.

Selon une caractéristique particulière de l'invention, le terminal de paiement électronique est caractérisé en ce que ledit module de paiement sans contact est déporté sur une partie d'au moins un côté dudit terminal de paiement électronique.

L'invention concerne également un guide lumière pour terminal de paiement électronique caractérisé en ce qu'il comprend au moins un patin amortisseur de choc.

Ainsi, l'invention concerne également un guide lumière présentant au moins un patin amortisseur permettant la protection du terminal de paiement électronique dans lequel le guide lumière est monté.

### 4 Liste des figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 correspond à une vue de la face avant d'un terminal de paiement électronique selon l'invention présentant un module de paiement sans contact déporté ;
- les figures 2a et 2b illustrent un guide lumière pour terminal de paiement électronique selon un mode de réalisation de l'invention, respectivement vue de face et vue de l'arrière ;
- la figure 2c illustre une vue de face d'un guide lumière pour terminal de paiement électronique selon un autre mode de réalisation de l'invention ;
- la figure 3 illustre un module de paiement sans contact intégré à un terminal de paiement électronique selon l'invention ;
- la figure 4 est une vue arrière d'un terminal de paiement électronique selon l'invention.

### 5 Description détaillée de l'invention

Le principe général de la technique décrite consiste à utiliser le guide lumière, initialement dédié à l'affichage des points lumineux imposés par les normes précitées de paiement sans contact pour signaler la progression de la transaction, pour rendre le terminal de paiement résistant aux chocs, par exemple lors des chutes.

Un tel guide lumière selon l'invention présente alors au moins un patin amortisseur de choc qui s'étend au-delà de la surface externe du terminal de paiement électronique une fois l'assemblage de ce dernier effectué.

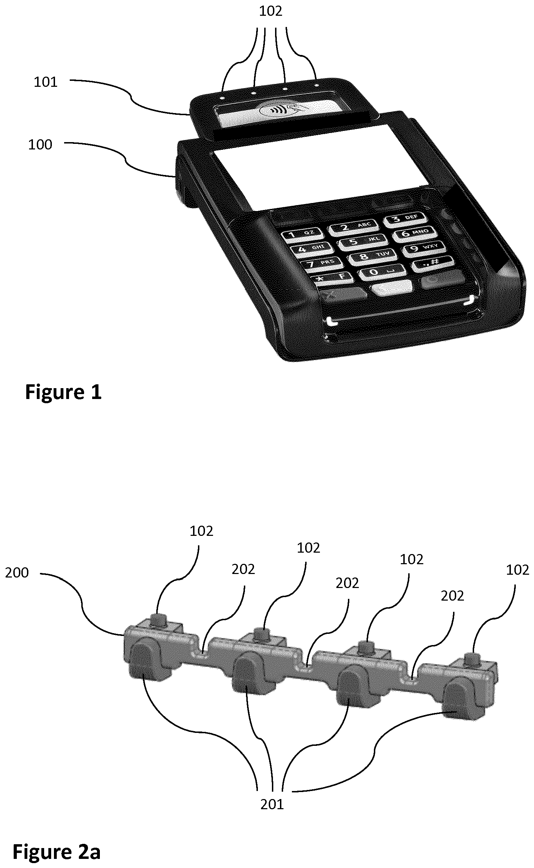

On décrit maintenant, en relation avec la **figure 1****,** un exemple de terminal de paiement électronique selon l'invention présentant un module de paiement sans contact déporté.

Selon ce mode de réalisation, le module de paiement sans contact 101 est déporté sur la partie supérieure du terminal de paiement électronique 100. Ainsi, aucune des parties latérale, droite ou gauche, du terminal n'est privilégiée, ce qui reste le meilleur compromis en terme d'ergonomie pour l'utilisateur ayant à présenter sa carte de paiement sans contact quelle que soit sa latéralité. Par ailleurs, la partie inférieure du terminal est dédiée à l'ouverture permettant l'insertion de la carte de paiement lors d'un paiement classique par contact, empêchant par là-même l'implémentation du module de paiement sans contact à cet endroit.

Le module de paiement présente quatre indicateurs lumineux 102 dédiés à afficher la progression de la transaction comme requis par les normes précitées pour les terminaux de paiement sans contact. Avantageusement, ces indicateurs lumineux sont réalisés à l'aide d'excroissances d'un guide lumière destiné à guider, vers l'extérieur du terminal, la lumière émise par des sources lumineuses (par exemple des diodes électroluminescentes ou LEDs) internes à ce terminal.

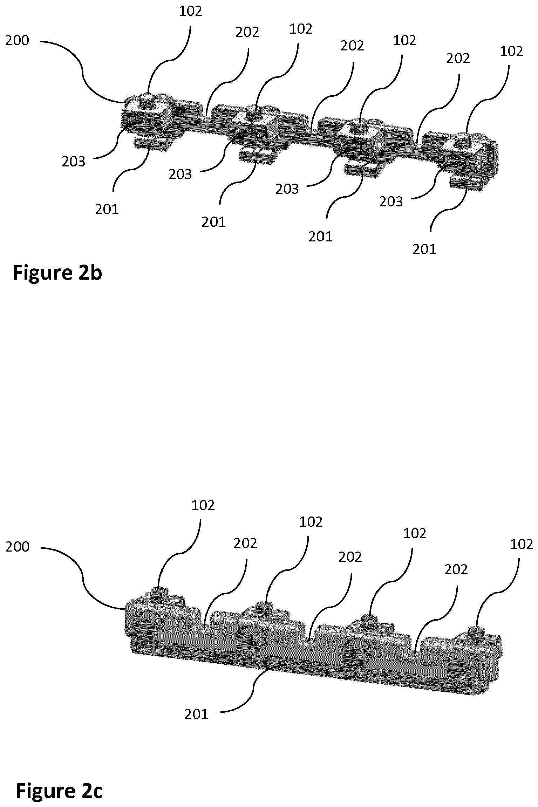

On décrit maintenant plus en détails la structure d'un tel guide lumière, en relation avec les **figures 2a** **et** **2b****,** selon un mode de réalisation de l'invention.

Selon ce mode de réalisation particulier, le guide lumière 200 présente des excroissances 102 en une matière permettant de guider la lumière, ces excroissances affleurant la surface du terminal de paiement électronique, en regard d'ouvertures ou de zones de transparence prévues sur cette surface, une fois le terminal assemblé. Par construction, ces excroissances sont disposées en regard d'emplacements 203 destinés à recevoir chacun une source lumineuse, typiquement une LED, ces sources lumineuses étant par exemple intégrées à un circuit imprimé du terminal de paiement électronique. Ainsi, la lumière émise par une de ces LED lorsqu'elle est allumée, est guidée jusqu'à la surface externe du terminal via l'excroissance du guide lumière, permettant par là-même de réaliser un indicateur lumineux.

Comme requis par les normes précitées sur les terminaux de paiement sans contact, quatre de ces indicateurs lumineux doivent être présents à la surface du terminal. Plus précisément, ces quatre indicateurs doivent pouvoir être allumés successivement afin d'illustrer la progression de la transaction. Ainsi, pour pouvoir arriver à ce résultat, il est nécessaire de pouvoir isoler les unes des autres ces excroissances 102 du guide lumière. Le guide lumière selon ce mode de réalisation étant réalisé en une matière unique (typiquement du silicone), l'« isolation » entre les excroissances est obtenue par un rétrécissement 202 de la partie faisant la liaison entre ces différentes excroissances 102, un tel rétrécissement permettant de couper, ou du moins limiter, la propagation lumineuse inter-excroissances.

De manière surprenante, il est alors apparu aux inventeurs que ce même matériau présentait des propriétés élastiques aptes à le rendre susceptible d'amortir des chocs en plus de ses propriétés utilisées classiquement pour guider la lumière. Ainsi, le guide lumière selon le mode de réalisation illustré sur les figures 2a et 2b comprend en outre des patins amortisseurs de choc 201 dépassant de la surface du terminal de paiement électronique une fois ce terminal assemblé. Ainsi, lors d'une chute par exemple, l'énergie dégagée par le choc peut se retrouver absorbée par de tels patins dépassant de la surface du terminal lorsqu'ils subissent le choc en premier lieu. Avantageusement, ces patins sont de la même matière que le reste du guide lumière, ce qui permet de garder les coûts de fabrication minimum, la pièce pouvant être réalisée en une seule étape de moulage. Typiquement, il s'agit de silicone dont la dureté peut être facilement optimisée pour l'absorption de chocs tout en préservant les qualités de conduction de la lumière. Une campagne d'essais a montré qu'une valeur de dureté comprise entre 55 et 65 Shore A, de préférence 60 Shore A, donnait des résultats optimaux aussi bien pour la propagation lumineuse que pour la protection des terminaux de paiement électronique selon l'invention lors de chutes d'une hauteur pouvant aller jusqu'à 1,20 m. Selon une méthode bien connue de l'homme du métier, de telles valeurs de dureté sont classiquement mesurées en utilisant un duromètre Shore équipé d'un pénétreur de type A.

Avantageusement, un patin amortisseur de choc est disposé en regard de chaque source lumineuse, conduisant ainsi à la présence de quatre patins amortisseurs sur le guide lumière correspondant au mode de réalisation décrit. Ces patins étant de la même matière que le reste du guide lumière, l'on obtient alors quatre patins qui s'allument respectivement en même temps que l'indicateur lumineux disposé en regard de la même source lumineuse qu'eux. De cette façon, l'on cumule l'effet d'amortissement avec celui de renforcement de la signalisation lumineuse.

Selon une variante de réalisation, illustrée sur la **figure 2c****,** le guide lumière peut présenter un seul patin amortisseur 201 d'une longueur proche de la longueur du guide lumière lui-même. Cette variante permet d'obtenir une forme plus simple du guide lumière tout en offrant une résistance aux chocs optimale du fait de la plus grande surface utilisée pour absorber les chocs. En revanche, une telle solution nécessite une plus grande quantité de matière pour le guide lumière.

Ainsi, le nombre, la forme et l'emplacement des patins amortisseurs sur le guide lumière peuvent être variables et choisis de façon à répondre de manière optimale à la problématique de la résistance aux chocs, tout en ne dégradant pas la fonction première du guide lumière pour répondre aux exigences des normes précitées en terme d'indication visuelle du paiement sans contact pour un utilisateur.

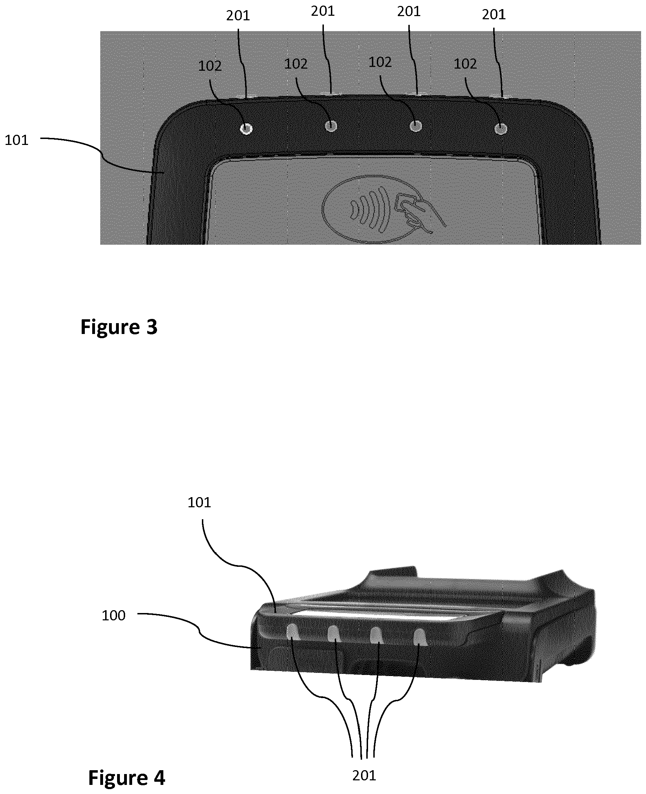

On décrit maintenant plus en détails la coopération d'un guide lumière avec le module de paiement sans contact dans lequel il est intégré, en relation avec la **figure 3****,** selon un mode de réalisation de l'invention.

Selon ce mode de réalisation particulier, le guide lumière est intégré dans un module de paiement sans contact 101 destiné à être déporté d'un terminal de paiement électronique. Les indicateurs lumineux, composés des excroissances 102 du guide lumière, ainsi que les patins amortisseurs de choc 201 sont alors les seuls éléments du guide lumière à être visibles depuis l'extérieur du module de paiement sans contact. Plus précisément, les excroissances sont alors affleurant à la face avant du module de paiement sans contact alors que les patins dépassent de cette surface pour amortir les chocs le cas échéant. Cependant, ces patins étant positionnés sur l'arête entre la face arrière et la tranche supérieure du module de paiement sans contact, ils restent discrets pour l'utilisateur qui se trouve dans une position nominale d'utilisation du terminal, i.e. qui regarde le module de paiement depuis l'avant.

Selon ce mode de réalisation, un patin se trouve aligné avec chaque indicateur lumineux composé d'une excroissance du guide lumière. Le guide lumière étant composé d'une matière unique, chaque patin s'allume alors en même temps que l'indicateur lumineux lui correspondant, ce qui renforce l'indication lumineuse informant l'utilisateur sur la progression de la transaction.

On décrit maintenant plus en détails un terminal de paiement électronique, en relation avec la **figure 4****,** selon un mode de réalisation de l'invention. Cette figure correspond en fait à une vue depuis le haut du module de paiement sans contact du terminal de paiement électronique (représenté de face sur la figure 1).

Ainsi, dans ce mode de réalisation, les patins amortisseurs de choc s'étendent de part et d'autre d'une des arêtes du module de paiement électronique se trouvant à la périphérie de la face arrière de ce module. En effet, les chutes de terminaux de paiement électronique se produisant principalement lors de la présentation du terminal par le commerçant à l'utilisateur de la carte de paiement, et cette présentation se faisant principalement l'écran orienté vers l'utilisateur, il est préférable de protéger en priorité les arêtes se trouvant à la périphérie de la face arrière du module de paiement qui sont les plus susceptible de heurter le sol en premier lieu lors de la chute.

Par ailleurs, le guide lumière étant avantageusement constitué d'une seule matière et fait d'une seule pièce, obtenue par exemple par moulage, la solution proposée se trouve alors être particulièrement résistante dans le temps. En effet, un patin d'amortissement dépassant de la surface externe d'un terminal de paiement selon l'invention ne peut être arraché lors d'une chute, comme ce pourrait être le cas pour de simples moyens d'amortissement fixés à la surface du module de paiement ou pour une coque de protection.

## Revendications

1. Terminal de paiement électronique (100) comprenant un guide lumière (200) destiné à guider la lumière d'au moins une source lumineuse interne audit terminal de paiement électronique vers l'extérieur dudit terminal de paiement électronique, ledit guide lumière étant intégré à un module de paiement sans contact (101) intégré audit terminal de paiement électronique, ledit terminal de paiement électronique étant **caractérisé en ce que** ledit guide lumière comprend en outre au moins un patin amortisseur de choc (201) s'étendant au-delà de la surface externe dudit terminal de paiement électronique.

2. Terminal de paiement électronique selon la revendication 1 **caractérisé en ce que** ledit au moins un patin amortisseur de choc s'étend de part et d'autre d'au moins une arête dudit terminal de paiement électronique.

3. Terminal de paiement électronique selon la revendication 2 **caractérisé en ce que** ladite au moins une arête est située en périphérie de la face arrière dudit terminal.

4. Terminal de paiement électronique selon l'une quelconque des revendications 1 à 3 **caractérisé en ce que** ledit patin amortisseur est constitué de la même matière que le reste du guide lumière.

5. Terminal de paiement électronique selon la revendication 4 **caractérisé en ce que** ladite matière est du silicone.

6. Terminal de paiement électronique selon l'une quelconque des revendications 4 ou 5 **caractérisé en ce que** ladite matière présente une dureté comprise entre 55 et 65 Shore A, de préférence 60 Shore A.

7. Terminal de paiement électronique selon l'une quelconque des revendications 4 à 6, le guide lumière présentant au moins une excroissance (102) affleurant la surface externe dudit terminal de paiement électronique, ladite excroissance étant disposée en regard de ladite au moins une source lumineuse interne audit terminal, **caractérisé en ce que** ledit patin amortisseur de choc est également disposé en regard de ladite au moins une source lumineuse interne audit terminal de paiement électronique.

8. Terminal de paiement électronique selon l'une quelconque des revendications 1 à 7 **caractérisé en ce qu'**il présente quatre desdits patins amortisseurs de choc.

9. Terminal de paiement électronique selon l'une quelconque des revendications 1 à 8 **caractérisé en ce que** ledit module de paiement sans contact est déporté sur une partie d'au moins un côté dudit terminal de paiement électronique.

10. Guide lumière (200) pour terminal de paiement électronique (100) **caractérisé en ce qu'**il comprend au moins un patin amortisseur de choc (201).

## Patentansprüche

1. Elektronisches Zahlungsterminal (100), umfassend einen Lichtwellenleiter (200), der dazu bestimmt ist, das Licht von mindestens einer Lichtquelle im Inneren des elektronischen Zahlungsterminal zu der Außenseite des elektronischen Zahlungsterminals zu leiten, wobei der Lichtwellenleiter in ein kontaktloses Zahlungsmodul (101) integriert ist, das in das elektronische Zahlungsterminal integriert ist, wobei das elektronische Zahlungsterminal **dadurch gekennzeichnet ist, dass** der Lichtwellenleiter ferner mindestens ein stoßdämpfendes Gleitstück (201) aufweist, das sich über die Außenfläche des elektronischen Zahlungsterminals hinaus erstreckt.

2. Elektronisches Zahlungsterminal nach Anspruch 1, **dadurch gekennzeichnet, dass** sich das mindestens eine stoßdämpfende Gleitstück auf beiden Seiten von mindestens einer Kante des elektronischen Zahlungsterminals erstreckt.

3. Elektronisches Zahlungsterminal nach Anspruch 2, **dadurch gekennzeichnet, dass** die mindestens eine Kante am Rand der Rückseite des Terminals angeordnet ist.

4. Elektronisches Zahlungsterminal nach einem der Ansprüche 1 bis 3, **dadurch gekennzeichnet, dass** das stoßdämpfende Gleitstück aus dem gleichen Material besteht, wie der Rest des Lichtwellenleiters.

5. Elektronisches Zahlungsterminal nach Anspruch 4, **dadurch gekennzeichnet, dass** das Material Silikon ist.

6. Elektronisches Zahlungsterminal nach einem der Ansprüche 4 oder 5, **dadurch gekennzeichnet, dass** das Material eine Härte zwischen 55 und 65 Shore A, vorzugsweise 60 Shore A, aufweist.

7. Elektronisches Zahlungsterminal nach einem der Ansprüche 4 bis 6, wobei der Lichtwellenleiter mindestens einen Vorsprung (102) aufweist, der mit der Außenfläche des elektronischen Zahlungsterminals bündig abschließt, wobei der Vorsprung gegenüber der mindestens einen Lichtquelle im Inneren des Terminals angeordnet ist, **dadurch gekennzeichnet, dass** das stoßdämpfende Gleitstück ebenfalls gegenüber der mindestens einen Lichtquelle im Inneren des Terminals angeordnet ist.

8. Elektronisches Zahlungsterminal nach einem der Ansprüche 1 bis 7, **dadurch gekennzeichnet, dass** es vier der stoßdämpfenden Gleitstücke aufweist.

9. Elektronisches Zahlungsterminal nach einem der Ansprüche 1 bis 8, **dadurch gekennzeichnet, dass** das kontaktlose Zahlungsmodul auf einem Teil von mindestens einer Seite des elektronischen Zahlungsterminals versetzt ist.

10. Lichtwellenleiter (200) für ein elektronisches Zahlungsterminal (100), **dadurch gekennzeichnet, dass** er mindestens ein stoßdämpfendes Gleitstück (201) aufweist.

## Claims

1. Electronic payment terminal (100) comprising a light guide (200) to guide the light from at least one light source internal to said electronic payment terminal to the exterior of said electronic payment terminal, said light guide being integrated with a contactless payment module (101) integrated with said electronic payment terminal, said electronic payment terminal being **characterized in that** said light guide further comprises at least one shock-absorbing pad (201) extending beyond the external surface of said electronic payment terminal.

2. Electronic payment terminal according to claim 1 **characterized in that** said at least one shock-absorbing pad extends on either side of at least one ridge of said electronic payment terminal

3. Electronic payment terminal according to claim 1 or 2 **characterized in that** said at least one ridge is situated on the periphery of the rear face of said terminal.

4. Electronic payment terminal according to any one of the claims 1 to 3 **characterized in that** said shock-absorbing pad is constituted by the same material as the rest of the light guide.

5. Electronic payment terminal according to claim 4 **characterized in that** said material is silicone.

6. Electronic payment terminal according to any one of the claims 4 or 5 **characterized in that** said material has a hardness value ranging from 55 to 65 Shore A, preferably 60 Shore A.

7. Electronic payment terminal according to any one of the claims 4 to 6, the light guide having at least one protrusion (102) flush with the external surface of said electronic payment terminal, said protrusion being disposed so as to be facing at least one light source internal to said terminal, the electronic payment terminal being **characterized in that** said shock-absorbing pad is also disposed so as to be facing said at least one light source internal to said electronic payment terminal.

8. Electronic payment terminal according to any one of the claims 1 to 7 **characterized in that** it has four of said shock-absorbing pads.

9. Electronic payment terminal according to any one of the claims 1 to 8 **characterized in that** said contactless payment module is externally mounted on at least one part of at least one side of said electronic payment terminal.

10. Light guide (200) for electronic payment terminals (100) **characterized in that** it comprises at least one shock-absorbing pad (201).
